# EUROPEAN PATENT APPLICATION

(11) **EP 1 134 100 A2**
(43) Date of publication of application: **19.09.2001**
(21) Application number: 01830130.9
(22) Date of filing: 23.02.2001
(51) Int. Cl.: B60G 15/06, B60G 11/18, F16F 9/14, B60G 3/14

(54) **Suspension system including rotary damper means**

(30) Priority: 17.03.2000 IT TO200254
(71) Applicant: C.R.F. Società Consortile per Azioni, 10043 Orbassano (TO) (IT)
(72) Inventor: Alacqua, Stefano, 10090 Rivoli (Torino) (IT); Butera, Francesco, 10132 Torino (IT)
(74) Representative: Notaro, Giancarlo

(57) **Abstract**

A mechanical suspension system, for example for motor vehicles, comprises a pair of independent arms (2) which are substantially coplanar and each of which has one end pivotably connected to a supporting structure (4). The two arms (2) of the suspension are brought back towards their resting position by elastic means consisting of two torsion bars (7) respectively connected to the two arms and having their axis of rotation coplanar with the axis of articulation of said arms, the ends of the torsion bars (7) being rigidly connected to the supporting structure (4). The shock-absorbing means of the suspension system consist of two rotational shock absorbers (8) associated to the two arms of the suspension, the axis of rotation of said shock absorbers (8) being coplanar with the axis of rotation of the arms (2) and of the torsion bars (7), said shock absorbers (8) being provided with means for regulating their own damping capacity. Preferably, said shock absorbers are of the magnetorheological type.

## Description

The present invention relates to mechanical suspensions, for example for motor vehicles, of the type comprising:
a pair of independent arms which, in a condition of rest, are substantially coplanar, each having one end pivotably connected to a supporting structure;
elastic means for bringing the arms back towards a resting position, the said elastic means consisting of a torsion bar rigidly connected to each arm and having an axis of rotation coplanar with the axis of articulation of the respective arm, the opposite end of the bar being rigidly connected to the supporting structure; and
shock-absorbing means associated to each arm for damping the oscillations of the arm.

Suspensions for motor vehicles, in particular rear suspensions, of the type specified above are known and have been used for some time in various versions which utilize both longitudinal arms, i.e. arms that are arranged substantially parallel to the longitudinal plane of the motor vehicle and are articulated about an axis that is transverse to said plane, and transverse arms, again with respect to the longitudinal direction of the motor vehicle, which are articulated about respective longitudinal axes, as well as oblique arms, namely arms arranged according to directions which are inclined both with respect to the longitudinal direction and with respect to a direction orthogonal to the longitudinal direction. Likewise known for some time is the use of elastic means in the form of torsion bars. The latter solution presents the advantage of a reduced bulk, as compared to the other conventional solution involving the use of helical springs arranged above the arms.

With the aim of proposing a new suspension that is particularly simple, compact and functional, the subject of the present invention is a suspension having the known characteristics referred to above and being further characterized in that the aforesaid shock-absorbing means are made up of two rotational shock absorbers which are respectively associated to the two arms of the suspension and each of which includes:
a casing rigidly connected to the supporting structure and defining, inside it, a chamber filled with shock-absorbing fluid;
a plate oscillating inside the casing about an axis that is coplanar with the axis of articulation of the respective arm of the suspension; and
at least one passage formed in the oscillating plate, through which the aforesaid shock-absorbing fluid seeps to pass from one section to the other of the chamber during movement of the plate;
said suspension being further characterized in that the aforesaid rotational shock absorber is provided with means for regulating its own damping capacity.

In a preferred embodiment, each of the two aforesaid rotational shock absorbers is of the type that forms the subject of the previous Italian Patent Application TO99A000643 filed by the present applicant on July 20, 1999 and still secret at the priority date of the present application. In accordance with the aforesaid previous proposal, each of the rotational shock absorbers forming part of the suspension according to the invention is characterized in that said shock-absorbing fluid is a magnetorheological or electrorheological fluid, and an electrically controlled excitation device is arranged in a position corresponding to said passage for controlling the resistance of outflow of the fluid that traverses the said passage.

Magnetorheological or electrorheological fluid compositions undergo a variation in apparent viscosity in the presence of a magnetic field or of an electric field. Magnetorheological fluids usually comprise ferromagnetic and paramagnetic particles, typically with diameters of the order of 1-10 micron, dispersed in a carrier fluid. In the presence of a magnetic field, the particles are polarized and organize themselves into chains of particles inside the fluid. The chains of particles operate in such a way as to increase the apparent viscosity or global outflow resistance of the fluid. In the absence of a magnetic field, the particles return to a free, i.e., non-organized state, and the apparent viscosity or outflow resistance of the material is reduced accordingly. Magnetorheological materials present a controllable behaviour similar to the one observed for electrorheological materials, which respond to an electric field instead of to a magnetic field. Both electrorheological materials and magnetorheological materials are useful for providing variable damping forces inside devices such as shock absorbers.

The magnetorheological shock absorbers of the more conventional type are typically of the cylinder-and-plunger type. These shock absorbers have relatively high working pressures (in the region of 30 bar) and must be equipped with seals on the stem. Magnetorheological or electrorheological fluids are abrasive, and the shock absorbers that use these fluids tend to present problems of leakage.

In the preferred embodiment of the invention, the magnetorheological rotational shock absorber is of the type that has already formed the subject of the previous patent application referred to above. With a rotational shock absorber of this type, the working pressure is substantially reduced as compared to a cylinder-and-plunger shock absorber having equal characteristics (for example, a pressure of 10 bar instead of 30 bar), with the result that there is a lower risk of leakage of fluid. A further advantage of the magnetorheological rotational shock absorber is that the fluid is subject to lower outflow rates than those of cylinder-and-plunger shock absorbers, and this makes it possible to govern the damping characteristics with greater precision and ease.

All the aforesaid advantages are combined, in the present invention, with the suspension arrangement described above in order to obtain the additional advantage of an extremely simple and compact suspension which is substantially flattened out in the plane in which the two arms of the suspension lie when they are in the resting condition.

The suspension according to the invention may be built either with longitudinal arms or with transverse arms, or yet again with oblique arms.

Further characteristics and advantages of the suspension according to the present invention will emerge from the ensuing description, with reference to the attached drawings, which are provided purely by way of non-limiting examples and in which:
- Figure **1** is a schematic perspective view of a first embodiment of a rear suspension according to the invention;
- Figure **2** is a partially sectioned plan view, at an enlarged scale, of a detail of Figure 1;
- Figure **3** is a cross-sectional view taken along the line III-III of Figure 2; and
- Figure **4** illustrates a variant of Figure 1.

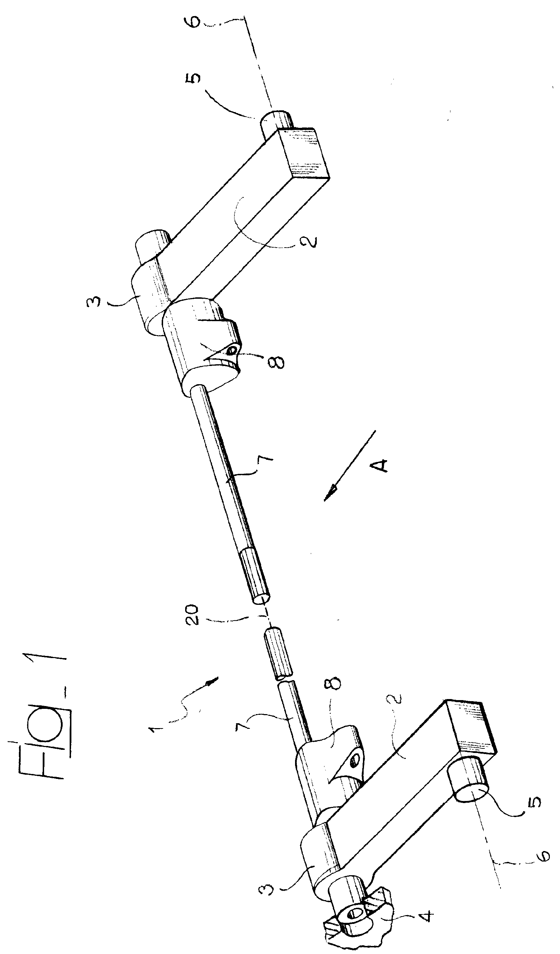

In the drawings, reference number 1 generally designates a rear suspension for motor vehicles, comprising two longitudinal arms 2, each having one end 3 articulated to the structure 4 of the motor vehicle about an axis 20 which is transverse with respect to the longitudinal direction of the motor vehicle (in Figure 1, the direction of advance of the motor vehicle is indicated by the arrow A). The rear end, designated by 5, of each arm 2 is designed to carry a respective wheel of the motor vehicle (not illustrated) about an axis 6.

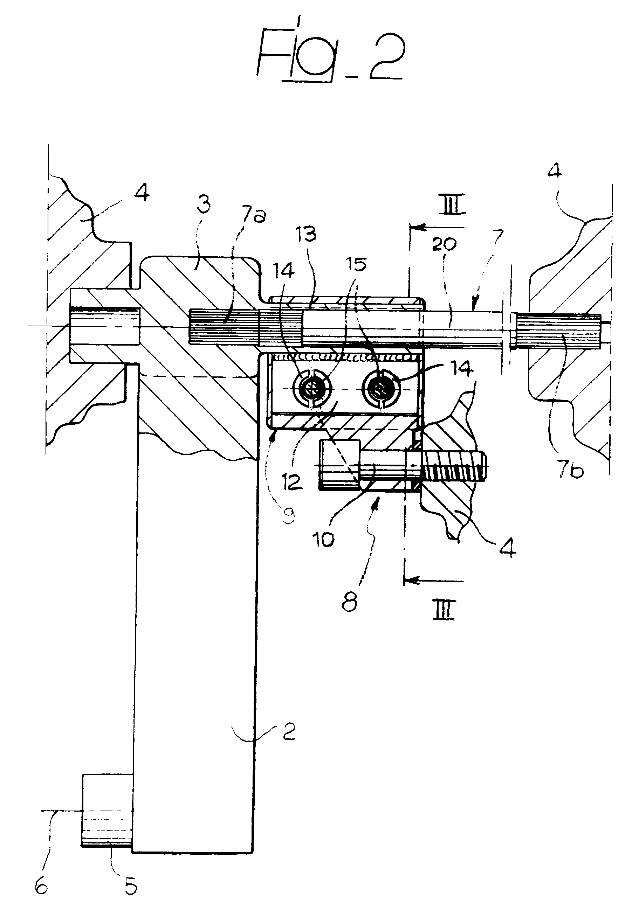

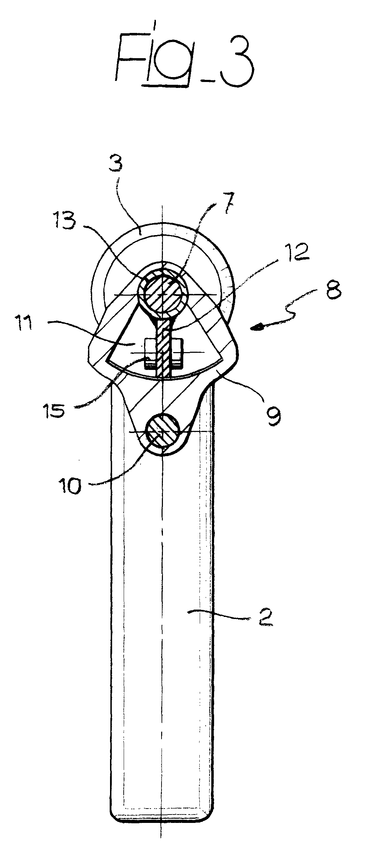

The two front ends of the longitudinal arms 2 are rigidly connected to the outer ends of two torsion bars 7 which are set along the transverse axis 20 of articulation of the longitudinal arms 2 and have their inner ends 7b rigidly connected to the structure of the motor vehicle in such a way as to act as elastic means designed to bring the two respective longitudinal arms 2 back into their resting position. The shock-absorbing action is exerted by two magnetorheological rotational shock absorbers 8, each built according to the teachings of the previous patent application filed by the present applicant, already cited hereinbefore. Each of the magnetorheological rotational shock absorbers 8 comprises a casing 9 connected, by means of screws 10, to the structure 4 of the motor vehicle (see Figure 2) and defining, within it, a chamber 11 (see Figure 3) and an outlet with a magnetorheological shock-absorbing fluid. Inside the chamber 11 there moves a plate 12 which divides the chamber 11 into two sections and which is mounted oscillating about the same transverse axis 20 of oscillation of the longitudinal arms 2 and is rigidly connected to the respective arm 2. With reference to Figure 2, in the example of embodiment illustrated the plate 12 is mounted on a hub 13 which is rigidly connected to the respective arm 2 and within which there passes the respective torsion bar 7, which has one end 7a rigidly connected to the respective arm, and the other end 7b (see again Figure 2) connected to the structure 4 of the motor vehicle. Once again according to the teachings of the previous patent application filed by the present applicant cited above (it is recalled that the aforesaid patent application is still secret at the date of filing of the present application), the plate 11 has two annular passages 14 for the seepage of the shock-absorbing fluid that occurs following upon oscillations of the plate 12. Set coaxially inside each annular passage 14 is a field coil 15 designed to create a magnetic field which determines the passage of the magnetorheological fluid from its higher-viscosity condition to its lower-viscosity condition according to what was illustrated previously.

Of course, the means provided for obtaining the variation in damping capacity of each shock absorber could be different from the ones illustrated herein purely by way of example. In other words, whilst still using two rotational shock absorbers in order to reduce the overall dimensions of the suspension, the said shock absorbers could also not be of a magnetorheological type and could, instead, exploit any other means (for example, regulatable valves) for varying the damping capacity.

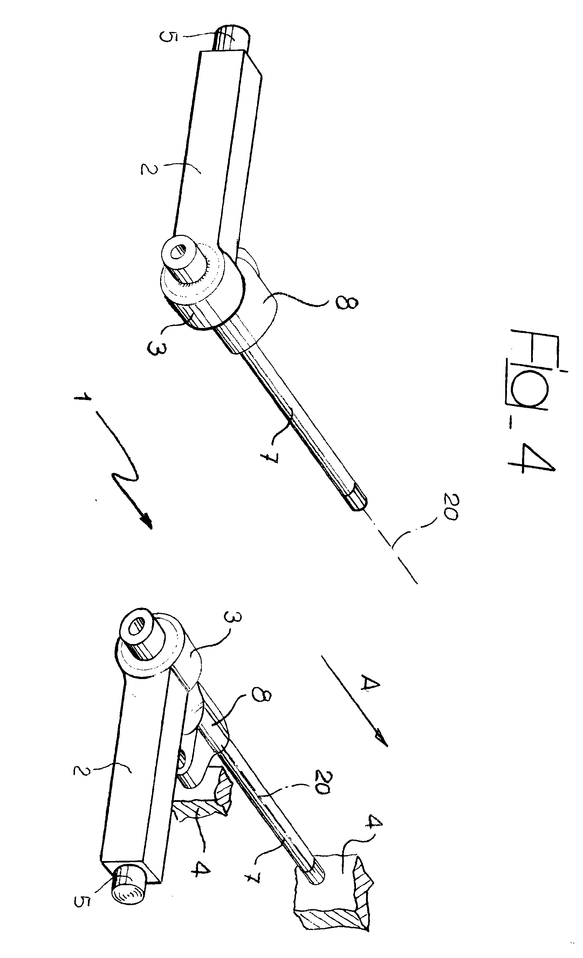

Figure 4 illustrates a variant in which the suspension arms are set so that they are transverse to the longitudinal plane of the motor vehicle and are articulated about mutually parallel longitudinal axes which coincide with the axes of the respective torsion bars. In Figure 4, the same reference numbers have been used to designate the parts that correspond to the ones in Figure 1.

Of course, without prejudice to the principle of the invention, the details of construction and the embodiments may vary widely with respect to what is described and illustrated herein purely by way of example, without thereby departing from the scope of the present invention.

For example, it is possible to envisage a solution in which the casing 9 of each shock absorber 8 is rigidly connected to the respective suspension arm, whilst the oscillating plate 12 is rigidly connected to the structure of the motor vehicle.

## Claims

1. A mechanical suspension system, for example for motor vehicles, comprising:
a pair of independent arms (2) which, in a condition of rest, are substantially coplanar, each having one end (3) pivotably connected to a supporting structure (4);
elastic means for bringing said arms (2) back towards a resting position, the said elastic means consisting of a torsion bar (7) rigidly connected to each arm (2) of the suspension and having an axis of rotation coplanar with the axis (20) of articulation of the respective arm (2), the opposite end of each torsion bar (7) being rigidly connected to the supporting structure (4); and
shock-absorbing means (8) associated to each arm (2) for damping the oscillations of the arm (2) and having an axis of rotation coplanar with the axis (20) of articulation of the respective arm (2),
**characterized in that** said shock-absorbing means consist of two rotational shock absorbers (8) which are associated to the two arms (2) of the suspension and each of which includes:
a casing (9) rigidly connected to the supporting structure (4) and defining a chamber (11) filled with shock-absorbing fluid;
a plate (12) oscillating inside the casing (9) about an axis of rotation that is coplanar with the axis (20) of articulation of the respective arm (2); and
at least one passage (14) formed in the oscillating plate (12), through which the aforesaid shock-absorbing fluid seeps to pass from one section to the other of the chamber (11) during movement of the plate (12);
and in that each rotational shock absorber (8) is provided with means for regulating its own damping capacity.

2. The suspension system according to Claim 1, **characterized in that** the shock-absorbing fluid is a magnetorheological or electrorheological fluid, and an electrically controlled excitation device (15) is arranged in a position corresponding to said passage (14) for controlling the resistance of outflow of the fluid that traverses said passage (14).

3. The suspension system according to Claim 2, **characterized in that** the aforesaid excitation device (15) is an electrically controlled field coil arranged coaxially with said passage (14).

4. The suspension system according to Claim 1, **characterized in that** the two arms (2) of the suspension are set so that they are substantially parallel to the longitudinal plane of the motor vehicle, and the axes of rotation of the arms (2), of the torsion bars (7), and of the shock absorbers (8) are coincident.

5. The suspension system according to Claim 1, **characterized in that** the two arms (2) of the suspension are set so that they are transverse with respect to the longitudinal plane of the motor vehicle, and the axes of rotation of the arms (2), of the torsion bars (7), and of the shock absorbers (8) are coincident.

6. The suspension system according to Claim 1, **characterized in that** the arms (2) of the suspension are each arranged according to a direction inclined both with respect to the longitudinal direction of the motor vehicle and with respect to a direction orthogonal to said longitudinal direction.
